# EUROPEAN PATENT APPLICATION

(11) **EP 4 827 192 A2**
(43) Date of publication of application: **21.10.2026**
(21) Application number: 26202749.3
(22) Date of filing: 11.11.2022
(51) Int. Cl.: H04W 56/00

(54) **TRANSMISSION METHOD AND APPARATUS, COMMUNICATION DEVICE, AND STORAGE MEDIUM**

(30) Priority: 11.11.2021 CN 202111333234
(62) Document number(s) of the earlier application(s) in accordance with Art. 76 EPC: 22892100.3 / 4 432 742
(71) Applicant: China Mobile Communication Co., Ltd Research Institute, Beijing 100053 (CN); China Mobile Communications Group Co., Ltd., Beijing 100032 (CN)
(72) Inventor: CHEN, Jingjing, Beijing 100053 (CN)
(74) Representative: GPI Brevets

(57) **Abstract**

Disclosed in embodiments of the present application are a transmission method and apparatus, a communication device, and a storage medium. The method comprises: obtaining first information, the first information being information related to a transmission timing; or, receiving a third time transmitted by a network device, the transmission timing of a terminal comprising the third time.

## Description

### TECHNICAL FIELD

The present application relates to the field of communications, and in particular, to a transmitting method, a transmitting apparatus, a communications device, and a storage medium.

### BACKGROUND

Wireless communication, especially long-distance wireless communication, faces a problem of wireless transmission delay. In the related art, in order to avoid inter-symbol interference, it is ensured that time when signals of different user equipment (UEs) reach a base station is within a Cyclic Prefix (CP) range, and a UE needs to transmit a data packet at a corresponding time in advance.

Actual timing of uplink transmission by the UE depends on downlink timing and a timing advance (TA). In some specific scenarios, since the downlink timing changes suddenly or timing difference is relatively large, uplink timing adjustment performed by the UE cannot meet actual requirements, resulting in inaccurate uplink timing, affecting uplink demodulation of the base station, and reducing system performance.

### SUMMARY

To resolve the technical problem in related art, some embodiments of the present application provide a transmitting method, a transmitting apparatus, a communication device, and a storage medium.

The technical solutions of the embodiments of the present application are implemented as follows.

A transmitting method performed by a User Equipment (UE) is provided. The method includes: obtaining first information, wherein the first information is information related to transmission timing.

Optionally, the first information includes Synchronization Signal Block (SSB) information; when a received beam is an SSB in the SSB information or a received Quasi Co-Location (QCL) is an SSB in the SSB information, the method further includes: applying first adjustment by the UE to adjust the transmission timing.

Optionally, the SSB information includes at least one of following: an SSB index; SSB pairing information; SSB group information; SSB group pairing information.

Optionally, the first information includes Synchronization Signal Block (SSB) information; when a received beam is an SSB in the SSB information or a received Quasi Co-Location (QCL) is an SSB in the SSB information, the transmission timing of the UE includes second time; wherein the second time includes at least one of following:
receiving time difference;
twice of the receiving time difference;
difference between receiving time before the first adjustment and receiving time after the first adjustment;
twice of the difference between the receiving time before the first adjustment and the receiving time after the first adjustment;
twice of the transmission timing error;
a transmission timing error.

Optionally, the first information further includes a first threshold; and when first time is greater than or equal to the first threshold, the method further includes: performing the first adjustment to the transmission timing by the UE; wherein the first time includes at least one of following:
receiving time difference;
difference between receiving time before the first adjustment and receiving time after the first adjustment;
a transmission timing error.

Optionally, the first information includes a first threshold; when first time is greater than or equal to the first threshold, the transmission timing of the UE includes second time; wherein the second time includes at least one of following:
receiving time difference;
twice of the receiving time difference;
difference between receiving time before the first adjustment and receiving time after the first adjustment;
twice of the difference between the receiving time before the first adjustment and the receiving time after the first adjustment;
twice of a transmission timing error;
the transmission timing error;
wherein the first time includes at least one of following:
receiving time difference;
difference between receiving time before the first adjustment and receiving time after the first adjustment;
a transmission timing error.

Optionally, the receiving time difference includes at least one of following:
receiving time difference caused by change of a reception beam of the UE;
receiving time difference caused by change of a transmission beam of a network;
receiving time difference caused by change of a transmission path.

Optionally, the first adjustment includes: one slot transmission timing adjustment.

Optionally, the transmission timing after the first adjustment includes at least one of following: a timing advance, uplink/downlink conversion time, and second time.

Optionally, the method includes: receiving first indication information transmitted by a network device, wherein the first indication information is configured to indicate whether the UE starts first adjustment.

Optionally, the method further includes: receiving at least one of following from a network device: second indication information indicating whether being in a high-speed train scenario; TCI conversion information; third indication information indicating whether to start first adjustment between two network units.

Optionally, the method further includes transmitting second information to a network device, wherein the second information includes at least one of following: fourth indication information indicating whether to perform first adjustment; a quantity number of times of performing first adjustment within a preset time duration; timestamp information of performing first adjustment.

Optionally, the first information further includes timing advance indication information, the timing advance indication information is configured to indicate an index range of the timing advance.

A transmitting method performed by a UE is provided. The method includes: receiving third time from a network device, wherein transmission timing of the UE includes the third time.

Optionally, the third time includes a timing difference value caused by beam conversion.

Optionally, receiving the third time from the network device includes: receiving a transmission configuration indicator (TCI) state conversion signaling from the network device, wherein the TCI state conversion signaling includes the third time; or receiving a timing advance command from the network device, wherein the timing advance command includes the third time.

Optionally, the method further includes: obtaining threshold information; wherein when the receiving time difference value of the UE meets an i-th threshold of the threshold information, a value of the third time is a j-th value corresponding to the i-th threshold.

Optionally, the transmission timing of the UE includes at least one of following: a first timing advance, uplink/downlink conversion time, and a second timing advance.

Optionally, the transmission timing of the UE includes at least one of following: first timing advance, uplink/downlink conversion time, second timing advance, and the third time.

Optionally, the method further includes: transmitting third information to a network device, wherein the third information includes at least one of following: whether to support reception of Timing Advance (TA) information carried by a TCI state switch; whether to support adjustment of uplink timing caused by a sharp change in the receiving time.

A transmitting method performed by a network device is provided. The method includes: transmitting first information or third time to a UE, wherein the first information is information related to transmission timing of the UE, and the third time is related to transmission timing of the UE.

Optionally, transmitting the third time to the UE includes: transmitting Transmission configuration indicator (TCI) state conversion signaling to the UE, wherein the TCI state conversion signaling includes the third time; or transmitting a timing advance command to the UE, wherein the timing advance command includes the third time.

Optionally, the third time includes a timing difference value caused by beam conversion.

Optionally, the method further includes: receiving third information from the UE, wherein the third information includes at least one of following: whether to support reception of timing advance (TA) information carried by a TCI state switch; whether to support adjustment of uplink timing caused by a sudden change of the receiving time.

Optionally, the first information includes SSB information, and the SSB information includes at least one of following: an SSB index; SSB pairing information; SSB group information; SSB group pairing information.

Optionally, the method includes: transmitting first indication information to the UE, wherein the first indication information is configured to indicate whether the UE starts first adjustment.

Optionally, the method further includes transmitting at least one of following to the UE: second indication information indicating whether being in a high-speed train scenario; TCI conversion information; third indication information indicating whether to start first adjustment between two network units.

Optionally, the first information further includes timing advance indication information, and the timing advance indication information is configured to indicate an index range of the timing advance.

Optionally, the method further includes receiving second information from the UE, wherein the second information includes at least one of following:
fourth indication information of whether to perform first adjustment;
a quantity of times of performing first adjustment within a preset time duration;
timestamp information of performing the first adjustment.

A transmitting apparatus applied to a UE is provided. The apparatus includes: a first obtaining unit, configured to obtain first information, wherein the first information is information related to transmission timing.

Optionally, the first information includes Synchronization Signal Block (SSB) information; when a received beam is an SSB in the SSB information or a received Quasi Co-Location (QCL) is an SSB in the SSB information, the apparatus further includes a first adjusting unit configured to apply first adjustment to adjust the transmission timing.

Optionally, the SSB information includes at least one of following: an SSB index; SSB pairing information; SSB group information; SSB group pairing information.

Optionally, the first information includes Synchronization Signal Block (SSB) information; when a received beam is an SSB in the SSB information or a received Quasi Co-Location (QCL) is an SSB in the SSB information, the transmission timing of the UE includes second time; wherein the second time includes at least one of following:
receiving time difference;
twice of the receiving time difference;
difference between receiving time before the first adjustment and receiving time after the first adjustment;
twice of the difference between the receiving time before the first adjustment and the receiving time after the first adjustment;
twice of the transmission timing error;
a transmission timing error.

Optionally, the first information further includes a first threshold; and when first time is greater than or equal to the first threshold, the method further includes: performing the first adjustment to the transmission timing by the UE; wherein the first time includes at least one of following:
receiving time difference;
difference between receiving time before the first adjustment and receiving time after the first adjustment;
a transmission timing error.

Optionally, the first information includes a first threshold; when first time is greater than or equal to the first threshold, the transmission timing of the UE includes second time; wherein the second time includes at least one of following:
receiving time difference;
twice of the receiving time difference;
difference between receiving time before the first adjustment and receiving time after the first adjustment;
twice of the difference between the receiving time before the first adjustment and the receiving time after the first adjustment;
twice of a transmission timing error;
the transmission timing error;
wherein the first time includes at least one of following:
receiving time difference;
difference between receiving time before the first adjustment and receiving time after the first adjustment;
a transmission timing error.

Optionally, the receiving time difference includes at least one of following:
receiving time difference caused by change of a reception beam of the UE;
receiving time difference caused by change of a transmission beam of a network;
receiving time difference caused by change of a transmission path.

Optionally, the first adjustment includes adjustment of the transmission timing by the UE in one-time adjustment, or can be described as one shot UL timing adjustment, or can be described as one step transmission timing adjustment.

Optionally, the transmission timing after the first adjustment includes at least one of following: a timing advance, uplink/downlink conversion time, and second time.

Optionally, the second receiving unit is configured to receive first indication information transmitted by a network device, wherein the first indication information is configured to indicate whether the UE starts first adjustment.

Optionally, the second receiving unit is configured to receive at least one of following from a network device: second indication information indicating whether being in a high-speed train scenario; TCI conversion information; third indication information indicating whether to start first adjustment between two network units.

Optionally, the apparatus further includes a second transmitting unit configured to transmit second information to a network device, wherein the second information includes at least one of following: fourth indication information indicating whether to perform first adjustment; a quantity number of times of performing first adjustment within a preset time duration; timestamp information of performing first adjustment.

Optionally, the first information further includes timing advance indication information, the timing advance indication information is configured to indicate an index range of the timing advance.

A transmitting apparatus applied to a UE is provided. The apparatus includes: a first receiving unit, configured to receive third time from a network device, wherein transmission timing of the UE includes the third time.

Optionally, the third time includes a timing difference value caused by beam conversion.

Optionally, the first receiving unit is configured to receive a transmission configuration indicator (TCI) state conversion signaling from the network device, wherein the TCI state conversion signaling includes the third time; or receive a timing advance command from the network device, wherein the timing advance command includes the third time.

Optionally, the apparatus further includes a second obtaining unit configured to obtain threshold information; wherein when the receiving time difference value of the UE meets an i-th threshold of the threshold information, a value of the third time is a j-th value corresponding to the i-th threshold.

Optionally, the transmission timing of the UE includes at least one of following: a first timing advance, uplink/downlink conversion time, and a second timing advance.

Optionally, the transmission timing of the UE includes at least one of following: first timing advance, uplink/downlink conversion time, second timing advance, and the third time.

Optionally, the apparatus further includes a third transmitting unit configured to transmit third information to a network device, wherein the third information includes at least one of following: whether to support reception of Timing Advance (TA) information carried by a TCI state switch; whether to support adjustment of uplink timing caused by a sharp change in the receiving time.

A transmitting apparatus applied to a network device is further provided. The apparatus includes: a first transmitting unit, configured to transmit first information or third time to a UE, wherein the first information is information related to transmission timing of the UE, and the third time is related to the transmission timing of the UE.

Optionally, the first transmitting unit is configured to transmit Transmission configuration indicator (TCI) state conversion signaling to the UE, wherein the TCI state conversion signaling includes the third time; or transmitting a timing advance command to the UE, wherein the timing advance command includes the third time.

Optionally, the third time includes a timing difference value caused by beam conversion.

Optionally, the apparatus further includes a third receiving unit configured to receive third information from the UE, wherein the third information includes at least one of following: whether to support reception of timing advance (TA) information carried by a TCI state switch; whether to support adjustment of uplink timing caused by a sudden change of the receiving time.

Optionally, the first information includes SSB information, and the SSB information includes at least one of following: an SSB index; SSB pairing information; SSB group information; SSB group pairing information.

Optionally, the first transmitting unit is configured to transmit first indication information to the UE, wherein the first indication information is configured to indicate whether the UE starts first adjustment.

Optionally, the first transmitting unit is configured to transmit at least one of following to the UE: second indication information indicating whether being in a high-speed train scenario; TCI conversion information; third indication information indicating whether to start first adjustment between two network units.

Optionally, the first information further includes timing advance indication information, and the timing advance indication information is configured to indicate an index range of the timing advance.

Optionally, the third receiving unit is configured to receive second information from the UE, wherein the second information includes at least one of following:
fourth indication information of whether to perform first adjustment;
a quantity of times of performing first adjustment within a preset time duration;
timestamp information of performing the first adjustment.

A communications device is provided. The communication device includes: a processor and a memory configured to store a computer program executable on the processor, wherein when the processor executes the computer program, the processor executes steps of a method performed at the UE side; or when the processor executes the computer program, the processor executes steps of another method performed at the UE side; or when the processor executes the computer program, the processor executes steps of the method performed at the network side.

A storage medium on which a computer program is stored is provided., wherein when the computer program is executed by a processor, the processor implements steps of a method at the UE side; or when the computer program is executed by a processor, the processor implements steps of another method at the UE side; or when the computer program is executed by a processor, the processor implements steps of a method at the network device side.

An embodiment of the present application provides a transmitting method, a transmitting apparatus, and a storage medium, where the method includes: obtaining first information, where the first information is information related to transmission timing. In this way, the UE may determine the transmission timing based on the received first information.

An embodiment of the present application provides a transmitting method, a transmitting apparatus, and a storage medium, where the method includes: receiving third time transmitted by a network device, where the transmission timing of the UE includes the third time. In this way, the UE may directly determine the transmission timing based on the received third time.

### BRIEF DESCRIPTION OF THE DRAWINGS

FIG. 1 is a reference schematic diagram of a Te value;
FIG. 2 is a reference schematic diagram of a Tq value;
FIG. 3 is application schematic diagram of an HST-DPS mode;
FIG. 4 is a schematic flowchart of a transmitting method according to some embodiments of the present application;
FIG. 5 is a schematic diagram of SSB switching according to some embodiments of the present application;
FIG. 6 is a schematic flowchart of another transmitting method according to some embodiments of the present application;
FIG. 7 is a schematic flowchart of still another transmitting method according to some embodiments of the present application;
FIG. 8 is a schematic structural diagram of a transmitting apparatus according to some embodiments of the present application;
FIG. 9 is a schematic structural diagram of another transmitting apparatus according to some embodiments of the present application;
FIG. 10 is a schematic structural diagram of still another transmitting apparatus according to some embodiments of the present application;
FIG. 11 is a schematic structural diagram of a communications device according to some embodiments of the present application.

### DETAILED DESCRIPTION

Before the present application is described in detail with reference to the embodiments, the related art is first described.

As described above, in order to avoid inter-symbol interference, it is ensured that time when signals of different UEs reach the base station is within the CP, and the UE needs to transmit a data packet at a corresponding time in advance. Based on the downlink timing, the UE usually transmits uplink data in advance (N_{TA} + N_{TA_offset})× T_{C}, where T_{C} is a basic time unit of the fifth generation mobile communication technology (5G), T_{C} = 1/(480*10^3*4096), and is about 0.5×10^(-3)us; N_{TA_offset} is uplink and downlink conversion time, the value of which is related to a deployment mode/coexistence scenario; * represents multiplication, i.e., ×; N_{TA} is a timing advance (TA) adjustment value; and N_{TA} is related to a TA command, and when the preamble is sent, N_{TA} = 0. The actual timing of uplink transmission by the UE depends on the downlink timing and the timing advance.

The random access response (RAR) of the random access procedure carries the TA command, and the TA command carries a TA index value (T_{A}), and in this case, the actual adjustment value required for uplink time is N_{TA} = T_{A} * 16T_{S} = T_{A} * 16 * 64 T_{C}. In a connected state, the User Equipment (UE) obtains T_{A} from the MAC CE of the TA command. The UE calculates the latest TA adjustment value (N_{TA, new}) based on the last TA adjustment value (denoted as N_{TA, old}) and the new TA command (T_{A}) received by the UE, and the formula for the calculation is as follows:
N_{TA,new}=N_{TA,old}+(T_{A}-31)×16Ts=N_{TA,old}+(T_{A}-31)×16×64Tc=N_{TA,old}+(T_{A}-31)×(16*64/2^u); where u is related to a subcarrier spacing (SCS), and when SCS is 15 kHz, u = 0; when SCS is 30 kHz, u = 1; when SCS is 60 kHz, u = 2; when SCS is 120 kHz, u = 3; when the SCS is 240 kHz, u = 4; Ts is a basic time unit of 4G, Ts = 1/(15*10^3)*2048, and is approximately 32.55×10 ^ (-9) s.

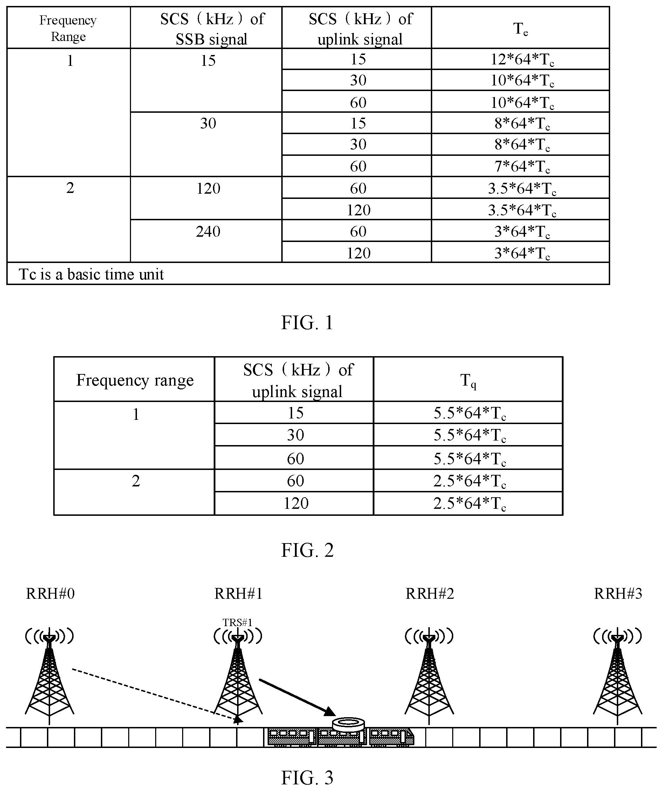

Due to the influence of factors such as transmission path change, crystal oscillator offset, and Doppler shift caused by movement, the UE needs to continuously update its uplink timing advance. Before the new TA command is not received, the UE automatically adjusts the uplink transmission timing according to the last TA command to ensure that the error between the actual transmission timing (the downlink timing 1-(N_{TA1}+N_{TA_offset})*Tc) and the ideal transmission timing (the downlink timing 2-(N_{TA1}+N_{TA_offset})*Tc)) satisfies a certain precision requirement Te. When the UE performs automatic uplink timing adjustment, the adjustment rule specified by the technical standards needs to be met: the maximum amplitude of time adjustment cannot exceed Tq. Specific requirements for Te and Tq refer to FIG. 1 and FIG. 2 below.

As described above in the prior art, the actual timing of the uplink transmission performed by the UE depends on the downlink timing and the timing advance. In some specific scenarios, due to sharp change in the downlink timing, the automatic uplink timing adjustment of the UE may not meet actual requirements. For example, in a high-speed train scene, especially a high-speed train having a frequency range of 2-24.25 GHz to 52.6 GHz (FR2) in a DPS (Dynamic Point Selection) mode, the above-mentioned automatic uplink timing adjustment of the UE based on an actual deployment requirement cannot meet actual requirements basically, resulting in inaccurate uplink timing, affecting uplink demodulation of a base station, and reducing system performance.

A HST (high-speed train)-DPS mode refers to that multiple cell Remote Radio Heads (RRH) share the same cell ID, but only one RRH transmits data to the UE at each time instant. As shown in FIG. 3, the RRH # 0-3 shares the same cell ID, but only one RRH transmits data to the UE at each time instant. As the UE moves, conversion from the RRH#0 to the RRH#1 is realized through a Transmission Configuration Indicator (TCI) conversion

As described above, conversion from the RRH # 0 to the RRH # 1 is beam conversion from the perspective of the UE, but the original downlink beam direction and the target downlink beam direction cause a large transmission delay difference, which causes the downlink timing to change, and the original TA cannot meet the requirement. Taking the typical spacing 700m of deployment stations as an example, the maximum transmission delay difference between the original downlink beam and the target downlink beam reaching the UE may reach 2.33 us, the transmission delay difference of 2.33 us is 4 times that of the CP (0.57us) in case of 120KHz SCS, but the maximum step size of the automatic adjustment of the UE is only 2.5×64 Tc = 8×10^(-4) us, which cannot compensate for the timing mutation caused by the downlink delay difference mutation, resulting in serious system problems. The problem is described herein by taking a high-speed train scenario as an example, but the problem is not limited to the high-speed train scenario. In a case that the network downlink transmission beam changes, a reception beam of the UE change, a transmission path changes, and the like, a relatively large UE receiving time difference or the UE receiving timing changes sharply, all of the above problems exist.

Based on this, in the method provided in this embodiment of the present application, the UE obtains first information, where the first information is information related to transmission timing; or the UE receives third time information transmitted by the network device, where the transmission timing of the UE includes the third time.

The following further describes the present application in detail with reference to the embodiments.

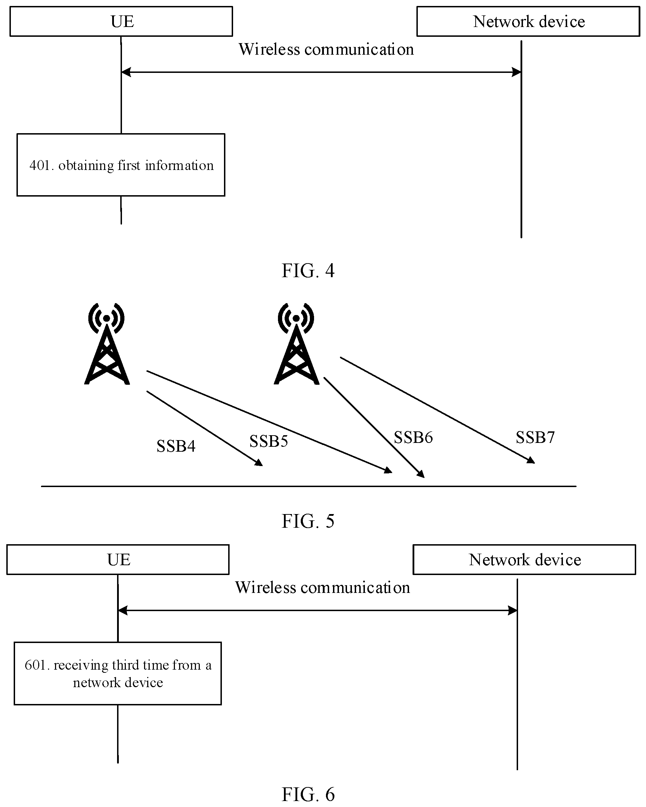

FIG. 4 is a schematic flowchart of a transmitting method according to some embodiments of the present application; as shown in FIG. 4, the transmitting method is applied to a UE, such as a mobile phone, a smart phone, a notebook computer, a digital broadcast receiver, a personal digital assistant (PDA), a tablet computer (PAD), a portable multimedia player (PMP), a wearable device (for example, a smart bracelet, a smart watch, etc.), a navigation apparatus, and the like. The method includes a step 401.

Step 401: obtaining first information, where the first information is information related to transmission timing.

The transmission timing may also be described as uplink timing (UL timing).

In actual application, the transmission timing may be predefined in technical specification, or may be notified by the network side to the UE.

Based on this, in some embodiments, obtaining the first information includes at least one of the following:
determining, by the UE, transmission timing according to predefinition of a technical specification;
receiving network information or signaling, determining transmission timing according to the network information or signaling. Herein, the network information or signaling carries or includes the transmission timing.

In some embodiments, the first information includes synchronization signal block (SSB, Synchronization Signal and PBCH block) information.

When the received beam is SSB in the SSB information or the received quasi co-location (QCL) is SSB in the SSB information, the method further includes:
adjusting, by the UE, the transmission timing by applying a first adjustment.

Herein, the received beam refers to a beam that receives information transmitted by a network device, and the received QCL refers to QCL of information transmitted by the network device. The information transmitted by the network device may be information related to the transmission timing, or information used to determine the transmission timing.

The received QCL refers to the SSB in the SSB information, a physical downlink shared channel (PDSCH), a physical downlink control channel (PDCCH), a reference symbol (for example, a channel state information reference signal (CSI-RS), a positioning reference signal (PRS) has a QCL relationship with an SSB indicated in the SSB information, and the QCL relationship may be indicated by using a TCI state.

Here, considering that a larger timing error (or an one-step adjustment needing to be performed with a large step size) may only occur in some SSBs (for example, switching from a specific SSB to another specific SSB), for example, as shown in FIG. 5, when the SSB 6 is switched to the SSB 7 or the SSB 4 is switched to the SSB 5, no large time error is caused, and the first adjustment may not be performed; but when the SSB 5 is switched to the SSB 6, the first adjustment needs to be performed due to a large time error. Therefore, the UE may be implicitly notified to perform the first adjustment in an implicit manner by indicating the SSB. That is, the SSB information is used to indicate the SSB to which the first adjustment is to be performed, and when the UE determines that the received beam is the SSB in the SSB information or the received QCL is the SSB in the SSB information, the first adjustment is applied to adjust the transmission timing.

The foregoing solution is applicable to scenarios of a high-speed train and an aircraft in which routes are relatively fixed.

In some embodiments, the SSB information includes at least one of the following: an SSB index; SSB pairing information; SSB group information; SSB group pairing information.

The SSB index includes a target SSB beam; for example, a target SSB beam for beam conversion or a target SSB beam for cell switching. The SSB index may include one or more SSB indices. When the target SSB beam belongs to the SSB index indicated in the SSB information, the UE applies the first adjustment.

The SSB pairing information includes an SSB pairing index, and/or an SSB index that constitutes SSB pairing, and/or mapping/correspondence between SSB pairing and an SSB index. The SSB pairing information may include multiple pairs of SSB pairing information. When a source beam index and a target beam index of beams encountering the beam conversion belong to the SSB pairing information, the UE applies the first adjustment.

The SSB group information includes an SSB group index and/or an SSB index in the SSB group. The SSB group information may include information of a plurality of SSB groups. The first adjustment is applied to SSBs in the group by the UE.

The SSB group pairing information includes an SSB group pairing index, and/or an SSB group index constituting the SSB group pairing, and/or mapping/correspondence between the SSB group pairing and the SSB group index. The SSB group pairing information may include multiple pairs of SSB group pairing information. When the source beam index and the target beam index of beams encountering the beam conversion belong to two paired SSB groups (that is, beam conversion occurs between the two paired SSB groups) respectively, the UE applies the first adjustment.

In some embodiments, the first information includes SSB information; and when the received beam is an SSB in the SSB information or the received QCL is an SSB in the SSB information, the transmission timing of the UE includes second time.

Herein, the received beam refers to a beam that receives information transmitted by a network device, and the received QCL refers to QCL that receives information transmitted by a network device. The information transmitted by the network device may be information related to the transmission timing, or information used to determine the transmission timing.

The second time represents a timing error to be adjusted (that is, a time error to be adjusted via the first adjustment).

In some embodiments, the first information further includes a first threshold; and when the first time is greater than or equal to a first threshold, the method further includes:
performing the first adjustment to the transmission timing by the UE.

Herein, the transmission timing of the UE is obtained by applying the first adjustment. the first time represents a timing difference value.

That is, when the UE determines that the timing difference exceeds the preset first threshold, it is considered that there is a large timing error (or one-step adjustment needs to be performed with a large step size), and the UE may apply the first adjustment to adjust the transmission timing. Therefore, the uplink transmission performance is ensured.

In some embodiments, the first information further includes a first threshold; and when the first time is greater than or equal to a first threshold, the transmission timing of the UE includes the second time.

Herein, the first time represents the time difference, and the second time represents a to-be-adjusted timing error (which may also be understood as a time error to be adjusted via the first adjustment).

That is, when the UE determines that the timing difference exceeds the preset first threshold, it is considered that there is a large timing error (or one-step adjustment needs to be performed with a large step size), the UE applies the first adjustment to adjust the transmission timing, and the adjusted transmission timing includes the second time.

The first threshold is indicated to the UE by the network device by using first signaling, or the first threshold is predefined in a technical specification. Candidate values of the first threshold include CP, CP/N, where N is a positive integer.

The first threshold is related to a subcarrier spacing.

In some embodiments, the second time includes at least one of the following:
receiving time difference, where the receiving time difference includes a timing difference between receiving timing at a time instant T1 and receiving timing at a time instant T2;
twice of the receiving time difference;
difference between the receiving time before the first adjustment and the receiving time after the first adjustment;
twice of the difference between the receiving time before the first adjustment and the receiving time after the first adjustment;
twice of the transmission timing error;
a transmission timing error.

The receiving time may also be described as downlink timing (DL timing). In detail, DL timing is the time when UE receives downlink frame. The receiving time difference is the difference between the time when UE receives downlink frame with new target TCI state and the time when UE receives downlink frame with an old source TCI state.

The transmission timing error includes an error relative to reference timing.

The reference timing may be understood as an ideal value, and specifically, when timing advances carried in both the downlink timing of the UE and the timing advance command are error-free, the reference timing may be the sum of the two reference timing. However, in an actual case, since an error may exist in the downlink timing estimation performed by the UE, and transmission path change, the temperature, the crystal oscillator offset and the like may also cause the change in the timing advance, that is, the two values of the two reference timing cannot reach a perfect value, and therefore, the transmission timing error herein needs to include an error with respect to the reference timing.

It should be noted that the difference between the receiving time before the first adjustment and the receiving time after the first adjustment is multiplied by 2, because the adjustment of the uplink timing is based on the downlink reference timing, and the timing difference between the trips of the uplink and the downlink needs to be considered.

In some embodiments, the first time includes at least one of the following:
receiving time difference, where the receiving time difference includes timing difference between the receiving timing at a time instant T1 and the receiving timing at a time instant T2;
difference between the receiving time before the first adjustment and the receiving time after the first adjustment;
a transmission timing error; here, the transmission timing error includes an error relative to the reference timing.

The receiving time difference includes the timing difference between the receiving timing at the receiving timing at the time instant T1 and the receiving timing at the time instant T2.

The transmission timing error includes an error relative to the reference timing.

In some embodiments, the receiving time difference includes at least one of the following:
receiving time difference caused by change of a reception beam of the UE;
receiving time difference caused by change of a transmission beam of the network;
receiving time difference caused by change of a transmission path.

The receiving time difference caused by the change of the reception beam of the UE includes: beam time difference, for example, the reception beam is changed from the reception beam i to the reception beam j, and the receiving time difference caused by the change of the beam of the UE includes timing difference between the receiving time of the beam i and the receiving time of the beam j.

The receiving time difference caused by the change of the transmission path includes: receiving time difference of the UE caused by the change of the transmission path (or receiving time difference of the UE).

The receiving time difference caused by the change of the transmission path includes: receiving time difference of the UE caused by the change of the transmission path (or receiving time difference of the UE).

In some embodiments, the first adjustment includes: one slot transmission timing adjustment.

It should be noted that the adjustment of the transmission timing in the related art is to adjust the uplink timing through multiple times of fine adjustment (small step-size adjustment for multiple times, which can also be described as gradual timing adjustment), but when the transmission timing error is large, the related cannot adjust the error in time, resulting in degradation of the system performance. The first adjustment provided in this embodiment of the present application means that the UE completes the adjustment of the timing error by one-time adjustment, and the step size of the one-time adjustment may be very large, thereby meeting the requirement of adjusting a large error in time. After the one-time adjustment of the larger step size is completed, and if there is still a residual error, the adjustment can continue to be performed by using a plurality of fine-tuning methods in the related art.

The UE may determine, based on the value of the timing difference that needs to be adjusted, whether to perform the one-time adjustment of the larger step size (which may also be described as one-step adjustment, i.e., first adjustment), and when the timing difference that needs to be adjusted is relatively large (for example, the first time is greater than or equal to the first threshold), the UE performs adjustment of the transmission timing based on the first adjustment (i.e. one-time adjustment); when the timing difference that needs to be adjusted is small (for example, the first time is less than or equal to the first threshold), the UE performs the adjustment of the transmission timing based on the prior art.

In some embodiments, the transmission timing after the first adjustment includes at least one of the following: timing advance, uplink/downlink conversion time, and second time.

Specifically, after the UE completes one-step adjustment, the transmission timing may be: transmitting uplink data [N_{TA} + N_{TA_offset})*Tc+ 2×receiving time difference] earlier. Further, new downlink timing may be used as a reference. N_{TA} represents the timing advance, N_{TA_offset} represents the uplink and downlink conversion time, T_{C} is a basic time unit of 5G, and is approximately 0.5×10^(-3) us

The second time is 2 × receiving time difference.

The second time may also be as described above, which is one of the following:
the receiving time difference;
difference between receiving time before the first adjustment and receiving time after the first adjustment;
twice of the difference between the receiving time before the first adjustment and the receiving time after the first adjustment;
twice of the transmission timing error;
transmission timing error.

In actual application, an explicit manner may be provided to indicate whether the UE starts the first adjustment.

Based on this, in some embodiments, the method includes:
receiving first indication information transmitted by a network device, where the first indication information is configured to indicate whether the UE starts the first adjustment.

In this way, the network device may explicitly notify the UE whether to start the first adjustment by using the first indication information.

In actual application, an implicit manner may be provided to indicate whether the UE starts the first adjustment.

Based on this, in some embodiments, the method further includes receiving at least one of the following from the network device:
second indication information indicating whether being in a high-speed train scenario;
TCI conversion information;
third indication information indicating whether to start the first adjustment between two network units.

Specifically, the second indication information indicating whether being in the high-speed train scenario includes being in an FR2 high-speed train scenario and being in an FR1 high-speed train scenario. As described above with respect to the high-speed train scenario, due to the deployment manner of the high-speed train scenario, there is an uplink timing problem caused by the jump of the receiving time of the UE caused by the path change. Here, a manner of instructing the UE to start the first adjustment in an implicit manner is provided. Specifically, when receiving the second indication information indicating currently being in the high-speed train scenario, the UE may estimate that there may be a transmission timing problem and thus the first adjustment may be started.

Further, the second indication information indicating whether being in the high-speed train scenario may further include a specific high-speed train deployment mode, including: HST dynamic point selection (HST-DPS), HST-SFN (HST-Single Frequency Network), uni-directional reception (i.e., transmission directions of different RRHs are same), bi-directional reception (i.e., transmission directions of adjacent RRHs are opposite, or may be described as an opposite manner). Since the influence of different deployment modes on the transmission timing are different, the UE may determine whether to start the first adjustment according to the current deployment mode. Optionally, for each deployment mode, whether the first adjustment may be started is further indicated by using the network information; or by using an implicit manner, it is predefined in the technical specification which deployment modes may start the first adjustment, and when the UE learns of the current deployment mode, whether to start the first adjustment may be determined.

The TCI conversion information includes information for TCI conversion between different RRHs; and the scenario also has an uplink timing problem caused by a jump of receiving time of the UE caused by the path change. Based on the TCI conversion information, the UE can also be implicitly indicated to start the first adjustment, that is, when the UE receives the TCI conversion information, it can be estimated that there is the transmission timing problem, and the first adjustment can be started.

The network units includes an RRH and a transmission and reception point (TRP). The third indication information indicating whether the first adjustment is started between the two network units is configured to indicate whether the first adjustment is started when the UE is allowed to be in the middle position of the two network units. In this way, the third indication information may also indicate the UE to start the first adjustment in an implicit manner. Here, it is mainly considered that the high-speed train scenario is taken as an example, and when the UE is in the middle position of the two RRHs, the encountered timing problem is the most serious, so the UE is only allowed to start the first adjustment at the position, and the first adjustment cannot be started at other geographic positions. Further, the network may indicate, by using signaling, whether the UE is in the middle position of the two RRHs; and further, the UE may autonomously determine, based on a Doppler frequency offset, whether the UE is in the middle position of the two RRHs.

In some embodiments, the method further includes: transmitting second information to a network device, where the second information includes at least one of the following:
fourth indication information indicating whether to perform the first adjustment;
the number of times of performing the first adjustment within a preset time duration;
timestamp information of performing the first adjustment.

In some embodiments, the first information further includes timing advance indication information, and the timing advance indication information is used to indicate an index range of the timing advance.

Specifically, in the embodiments of the present application, the index range of the timing advance carried by the timing advance command in the related art is 0-3846, and the timing advance provided in the prior art cannot meet the requirement in the embodiments of the present application considering the jump of the receiving time difference caused by beam conversion and the like, a method of indicating the index range of the timing advance is provided, specifically, by adding the index range of the timing advance carried in the timing advance command, the application requirement is met, that is, the index range of the timing advance indicated by the timing advance indication information may exceed 0-3846

Further, considering an additional influence on the UE, the network device may indicate, by using the timing advance indication information, to the UE whether the network device uses the index range (that is, 0-3846) of the timing advance in the prior art or the expanded index range (that is, a range exceeding 0-3846) of the timing advance, so that the UE uses different algorithms for different ranges.

In some embodiments, acquiring the first information includes at least one of the following:
receiving SSB information from a network device;
receiving timing advance indication information from the network device;
receive a first threshold from the network device.

In some embodiments, obtaining the first information further includes determining a first time. That is, at least one of the following is determined:
receiving time difference;
difference between the receiving time before the first adjustment and the receiving time after the first adjustment;
transmission timing error.

The first information is specifically determined by the UE based on information (carrying a timestamp) of interaction between the UE and the network device. Details are not described herein again.

FIG. 6 is a schematic flowchart of another transmitting method according to some embodiments of the present application; as shown in FIG. 6, the method is applied to a UE, such as a mobile phone, a smart phone, a notebook computer, a digital broadcast receiver, a personal digital assistant (PDA), a tablet computer (PAD), a portable multimedia player (PMP), a wearable device (for example, a smart bracelet, a smart watch, etc.), a navigation apparatus, and the like.

Step 601: receiving the third time from a network device, where the transmission timing of the UE includes the third time.

In some embodiments, the third time includes a timing difference value caused by beam conversion.

Here, the timing difference value brought by beam conversion includes:
a receiving time difference value of the UE caused by transmission beam conversion or transmission beam change of the network device, and/or a receiving time difference value of the UE caused by the receiving beam conversion or the receiving beam change of the UE.

In some embodiments, receiving the third time from the network device includes:
receiving a transmission configuration indicator (TCI) state conversion signaling from the network device, where the TCI state conversion signaling includes the third time; or
receiving a timing advance command from the network device, where the timing advance command includes the third time.

In some embodiments, the method further includes:
obtaining threshold information; and when the receiving time difference value of the UE meets an i-th threshold of the threshold information, a value of the third time is a j-th value corresponding to the i-th threshold.

Herein, the threshold information includes at least one threshold and a value of the third time corresponding to each of the at least one threshold, for example, an i-th threshold and a j-th value corresponding to the i-th threshold.

The threshold information may be transmitted by the network device to the UE through network signaling.

After the UE obtains the threshold information, and when the receiving time difference of the UE satisfies the i-th threshold of the threshold information, the value of the third time is the j-th value. During application, the network device transmits the candidate values of the third time related to the transmission timing to the UE in advance through the network signaling, and the UE selects the corresponding value of the third time according to the actual receiving time difference.

For example, if the receiving time difference is greater than the first threshold and less than the second threshold, the third time takes the first value; if the receiving time difference is greater than the second threshold and less than the third threshold, the third time takes the second value; if the receiving time difference is greater than the third threshold and less than the fourth threshold, the third time takes the third value; if the receiving time difference is greater than the (N-1)-th threshold is less than the N-th threshold, the third time takes the (N-1)-th value; if the receiving time difference is greater than the N-th threshold, the third time takes the N-th value.

In some embodiments, the transmission timing of the UE includes at least one of the following: a first timing advance, uplink and downlink conversion time, and a second timing advance.

The second timing advance includes the third time, that is, includes influence caused by a receiving time difference) and/or influence caused by movement, temperature, crystal oscillator, and the like (that is, timing advance influence factors considered in the related art).

During application, the UE may transmit uplink data [(N_{TA} + N_{TA_offset})*Tc] earlier, where N_{TA_offset} represents the uplink and downlink conversion time; T_{C} is approximately 0.5×10^(-3)us; N_{TA} = first timing advance + (second timing advance - 31) × 16 T_{S} = first timing advance + (second timing advance - 31) × 16 × 64 T_{C}.

Here, the second timing advance may be issued by the network device (for example, the network device issues the second timing advance by using the TCI state conversion signaling or the timing advance command), and the value of the second timing advance includes the influence caused by the third time. That is, the network device notifies the UE of the third time in an implicit manner. The UE may directly use the second timing advance when transmitting the timing.

In some embodiments, the transmission timing of the UE includes at least one of the following: first timing advance, uplink and downlink conversion time, second timing advance, and a third time.

In this embodiment, the network device notifies the UE that since there may be the receiving time difference of the UE due to the potential beam adjustment, the network device notifies the UE of the third time in an explicit manner.

The first timing advance is obtained by a previous Timing Advance Command, and the second timing advance is obtained by a current Timing Advance Command.

In application, the UE may transmit uplink data ([N_{TA} + N_{TA_offset})*Tc] earlier, where N_{TA} = first timing advance + (second timing advance + third time - 31) × 16 T_{S} = first timing advance + (second timing advance + third time - 31) × 16 × 64 T_{C}. N_{TA_offset} represents the uplink and downlink conversion time; T_{C} is about 0.5 × 10^(- 3) us.

Specifically, after obtaining the third time (including the timing difference (or the at least one candidate TA value) caused by beam conversion) transmitted by the network device, the UE determines the TA value corresponding to the third time based on the determined receiving time difference and the threshold information, and adjusts the uplink transmission timing according to the TA value, and transmits the uplink data [(N_{TA} + N_{TA_offset})*Tc] ahead of time based on the new downlink timing; where , N_{TA} = N_{TA,old} + (T_{A_beam change}-31)×16Ts = N_{TA,ol}d + (T_{A_beam change}-31)×16×64Tc. N_{TA, old} is a previously adopted TA value (that is, the first timing advance); and T_{A_beam change} is a TA value caused by beam change and includes: the second timing advance + the third time.

In some embodiments, the method further includes transmitting first information to the network device, where the first information includes at least one of the following: whether to support reception of TA information carried by a TCI state switch; whether to support adjustment of uplink timing caused by a sharp change in the receiving time.

The method shown in FIG. 4 and FIG. 6 solves the problem caused by a sudden or large change of the receiving time difference of the UE, wherein the method shown in FIG. 6 is more suitable for a scenario in which only a downlink transmitting beam of the network side changes (for example, a high-speed train scenario, an aviation scenario, or the like, and the foregoing scenario has general understanding for a beam conversion, and thus, the third time may be known). In a scenario in which the receiving beam of the UE changes, because the network side has no relevant information, the method described in FIG. 4 is more applicable. During, selection between FIG. 4 and FIG. 6 is performed according to actual situations, which is not limited herein.

The UE to which the method provided in this embodiment of the present application is applied has at least one of the following capabilities:
the UE supports uplink timing adjustment in one-step adjustment;
the UE supports reception of TA information carried by a TCI state switch;
the UE supports adjusting uplink timing adjustment caused by a sudden change in the receiving time.

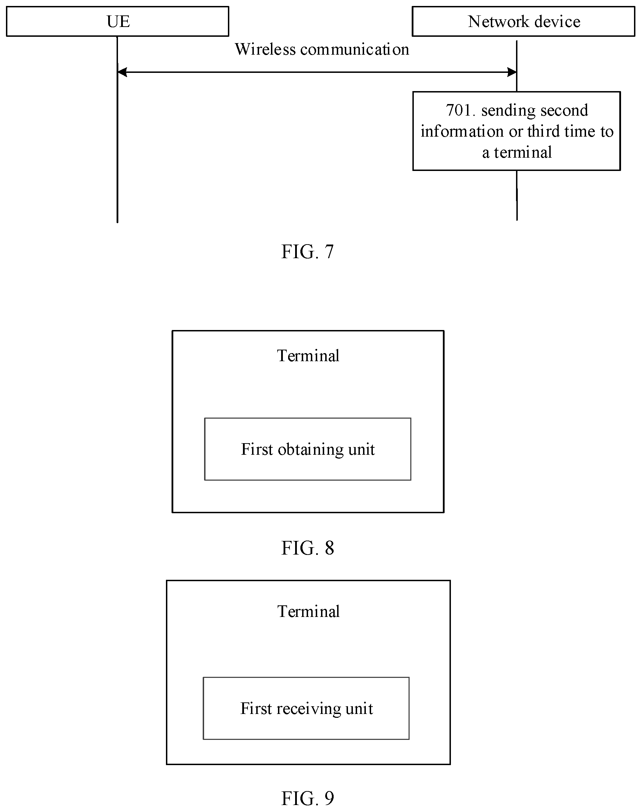

FIG. 7 is a schematic flowchart of still another transmitting method according to some embodiments of the present application; As shown in FIG. 7, the method is applied to a network device, for example, a base station, where the base station may be a Base Transceiver Station (BTS) in GSM or CDMA, or may be a NodeB ("NB" for short) in WCDMA, or may be an Evolutional Node B (eNB or e-NodeB) in LTE, which is not limited in the present disclosure. However, for description purpose, the eNB is used in the following description. The method includes:
Step 701: transmit first information or third time to a UE, where the first information is information related to transmission timing of the UE, and the third time is related to transmission timing of the UE.

In some embodiments, transmitting the third time to the UE includes: transmitting TCI state conversion signaling to the UE, where the TCI state conversion signaling includes the third time; or transmitting a timing advance command to the UE, where the timing advance command includes the third time.

In some embodiments, the third time includes a timing difference value caused by beam conversion.

In some embodiments, the method further includes: receiving third information from the UE, where the third information includes at least one of the following: whether to support reception of timing advance (TA) information carried by a TCI state switch; whether to support adjustment of uplink timing caused by a sudden change of the receiving time.

In some embodiments, the first information includes SSB information, and the SSB information includes at least one of the following: an SSB index; SSB pairing information; SSB group information; SSB group pairing information.

In an actual application, the network device may indicate, in an explicit manner, whether the UE starts the first adjustment.

Based on this, in some embodiments, the method includes: transmitting first indication information to the UE, where the first indication information is used to indicate whether the UE starts the first adjustment.

In actual application, the network device may indicate, in an implicit manner, whether the UE starts the first adjustment.

Based on this, in some embodiments, the method further includes transmitting at least one of the following to the UE: second indication information indicating whether being in a high-speed train scenario; TCI conversion information; third indication information indicating whether to start the first adjustment between the two network units.

In some embodiments, the first information further includes timing advance indication information, and the timing advance indication information is used to indicate an index range of the timing advance.

In some embodiments, the method may further include: receiving second information from the UE, where the second information includes at least one of the following: fourth indication information of whether to perform first adjustment; the number of times of performing the first adjustment within a preset time duration; timestamp information of performing the first adjustment.

FIG. 8 is a schematic structural diagram of a transmitting apparatus according to some embodiments of the present application; as shown in FIG. 8, the apparatus is applied to a UE, and the apparatus includes: a first obtaining unit, configured to obtain first information, where the first information is information related to transmission timing.

In some embodiments, the first information includes SSB information; when the received beam is the SSB in the SSB information or the received QCL is the SSB in the SSB information, the apparatus further includes a first adjusting unit configured to adjust the transmission timing by applying the first adjustment to the UE.

In some embodiments, the SSB information includes at least one of the following: an SSB index; SSB pairing information; SSB group information; SSB group pairing information.

In some embodiments, the first information includes SSB information; when a received beam is an SSB in the SSB information or a received QCL is an SSB in the SSB information, the transmission timing of the UE includes the second time; and the second time includes at least one of the following: receiving time difference; twice of the receiving time difference; difference between the receiving time before the first adjustment and the receiving time after the first adjustment; twice of the difference between the receiving time before the first adjustment and the receiving time after the first adjustment; twice of the transmission timing error; transmission timing error.

In some embodiments, the first information further includes a first threshold; when the first time is greater than or equal to a first threshold, the first adjusting unit is configured to apply a first adjustment to adjust the transmission timing; and
The first time includes at least one of the following: the receiving time difference; the difference between the receiving time before the first adjustment and the receiving time after the first adjustment; a transmission timing error.

In some embodiments, the first information includes a first threshold; when the first time is greater than or equal to a first threshold, the transmission timing of the UE includes a second time.

The second time includes at least one of the following: the receiving time difference; twice of the receiving time difference; the difference between the receiving time before the first adjustment and the receiving time after the first adjustment; twice of the difference between the receiving time before the first adjustment and the receiving time after the first adjustment; twice of the transmission timing error; transmission timing error.

The first time includes at least one of the following: receiving time difference; difference between the receiving time before the first adjustment and the receiving time after the first adjustment; transmission timing error.

In some embodiments, the receiving time difference includes at least one of the following: receiving time difference caused by a change of a receiving beam of the UE; and receiving time difference caused by a change of a transmission beam of the network; receiving time difference caused by change of a transmission path.

In some embodiments, the first adjustment includes: one slot transmission timing adjustment.

In some embodiments, the transmission timing after the first adjustment includes at least one of the following: a timing advance, uplink/downlink conversion time, and a second time.

In some embodiments, the second receiving unit is configured to receive first indication information transmitted by a network device, where the first indication information is used to indicate whether the UE starts the first adjustment.

In some embodiments, the second receiving unit is configured to receive at least one of the following from the network device:
second indication information indicating whether being in a high-speed train scenario;
TCI conversion information;
third indication information indicating whether to start the first adjustment between two network units.

In some embodiments, the apparatus further includes: a second transmitting unit, configured to transmit second information to the network device, where the second information includes at least one of the following:
fourth indication information indicating whether to perform the first adjustment;
the number of times of performing the first adjustment within a preset time duration;
timestamp information of performing the first adjustment.

In some embodiments, the first information further includes timing advance indication information, and the timing advance indication information is used to indicate an index range of the timing advance.

It should be noted that, when the transmitting apparatus provided in the foregoing embodiment implements the corresponding transmitting method, the division of the program modules is only used for example. In actual application, the processing may be allocated to and completed by different program modules according to needs, that is, the internal structure of the UE is divided into different program modules to complete all or part of the processing described above. In addition, the apparatus provided in the foregoing embodiment and the embodiments of the corresponding method belong to the same concept, and the specific implementation process of the apparatus is described in the method embodiment in details, and details are not described herein again.

FIG. 9 is a schematic structural diagram of another transmitting apparatus according to some embodiments of the present application; as shown in FIG. 9, the apparatus is applied to a UE, and the apparatus includes: a first receiving unit, configured to receive the third time from a network device, where the transmission timing of the UE includes the third time.

In some embodiments, the third time includes a timing difference value caused by beam conversion.

In some embodiments, the first receiving unit is configured to receive TCI state conversion signaling transmitted by a network device, where the TCI state conversion signaling includes the third time; or receiving a timing advance command transmitted by a network device, where the timing advance command includes the third time.

In some embodiments, the apparatus further includes: a second obtaining unit, configured to obtain threshold information; and when the receiving time difference value of the UE meets an i-th threshold of the threshold information, a value of the third time is a j-th value corresponding to the i-th threshold.

In some embodiments, the transmission timing of the UE includes at least one of the following: a first timing advance, uplink and downlink conversion time, and a second timing advance. The second timing advance includes the third time.

I n some embodiments, the transmission timing of the UE includes at least one of the following: first timing advance, uplink and downlink conversion time, second timing advance, and a third time.

In some embodiments, the apparatus further includes: a third transmitting unit, configured to transmit third information to the network device, where the third information includes at least one of the following: whether to support reception of TA information carried by a TCI state switch; whether to support adjustment of uplink timing caused by a sharp change in the receiving time.

It should be noted that, when the transmitting apparatus provided in the foregoing embodiment implements the corresponding transmitting method, the division of the program modules is only used for example. In actual application, the processing may be allocated to and may be completed by different program modules according to needs, that is, the internal structure of the UE is divided into different program modules to complete all or part of the processing described above. In addition, the apparatus provided in the foregoing embodiment and the embodiments of the corresponding method belong to the same concept, and the specific implementation process of the apparatus is described in detailed in the method embodiment, and details are not described herein again.

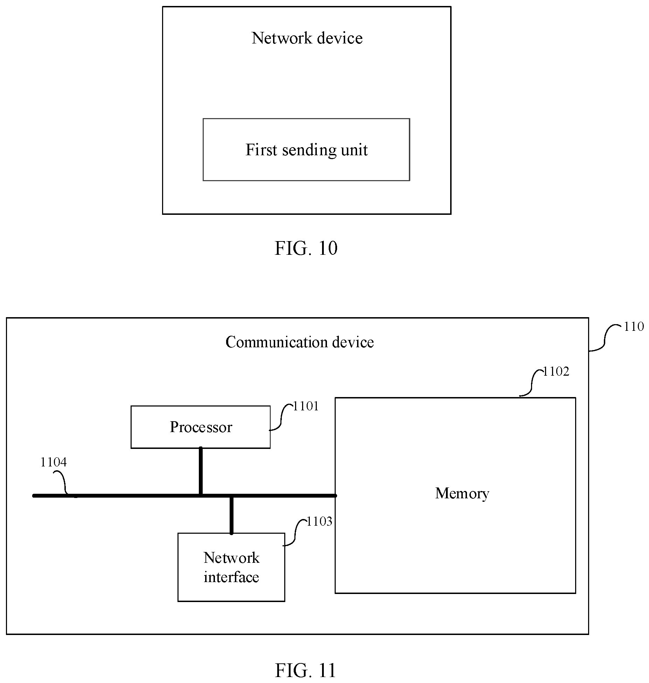

FIG. 10 is a schematic structural diagram of still another transmitting apparatus according to some embodiments of the present application; as shown in FIG. 10, the apparatus is applied to a network device, and the apparatus includes: a first transmitting unit, configured to transmit first information or third time to a UE, where the first information is information related to transmission timing of the UE, and the third time is related to transmission timing of the UE.

In some embodiments, the first transmitting unit is configured to transmit TCI state conversion signaling to the UE, where the TCI state conversion signaling includes the third time; or transmit a timing advance command to the UE, where the timing advance command includes the third time.

In some embodiments, the third time includes a timing difference value caused by beam conversion.

In some embodiments, the apparatus further includes: a third receiving unit, configured to receive third information from the UE, where the third information includes at least one of the following: whether to support reception of timing advance (TA) information carried by a TCI state switch; whether to support adjustment of uplink timing caused by a sudden change of the receiving time.

In some embodiments, the first information includes SSB information, and the SSB information includes at least one of the following: an SSB index; SSB pairing information; SSB group information; SSB group pairing information.

In some embodiments, the first transmitting unit is configured to transmit first indication information to a UE, where the first indication information is used to indicate whether the UE starts the first adjustment.

In some embodiments, the first transmitting unit is configured to transmit at least one of the following to the UE: second indication information indicating whether being in a high-speed train scenario; TCI conversion information; third indication information indicating whether to start the first adjustment between the two network units.

In some embodiments, the first information further includes timing advance indication information, and the timing advance indication information is used to indicate an index range of a timing advance.

In some embodiments, the third receiving unit is configured to receive second information from the UE, where the second information includes at least one of the following: fourth indication information of whether to perform first adjustment; the number of times of performing the first adjustment within a preset time duration; timestamp information of performing the first adjustment.

It should be noted that, when the transmitting apparatus provided in the foregoing embodiment implements the corresponding transmitting method, the division of the program modules is only used for example. In actual application, the processing may be allocated to and be completed by different program modules according to needs, that is, the internal structure of the network device is divided into different program modules to complete all or part of the processing described above. In addition, the apparatus provided in the foregoing embodiment and the embodiments of the corresponding method belong to the same concept, and the specific implementation process of the apparatus is described in details in the method embodiment, and details are not described herein again.

FIG. 11 is a schematic structural diagram of a communication device according to some embodiments of the present application, and as shown in FIG. 11, the communication device 110 includes a processor 1101 and a memory 1102 configured to store a computer program capable of running on the processor;

When the communication device is applied to the UE, the processor 1101 is configured to run the computer program to: obtain first information, where the first information is information related to transmission timing. Specifically, the UE may perform the method shown in FIG. 4 and belongs to the same concept as the method embodiment shown in FIG. 4, and its specific implementation process is described in the method embodiment, and details are not described herein again.

When the communication device is applied to the UE, the processor 1101 is configured to run the computer program to receive third time transmitted by the network device, where the transmission timing of the UE includes the third time. Specifically, the UE may perform the method shown in FIG. 6 and belongs to the same concept as the method embodiment shown in FIG. 6, and its specific implementation process is described the method embodiment, and details are not described herein again.

When the communication device is applied to a network device, the processor 1101 is configured to run the computer program to transmit first information or third time to the UE, where the first information is information related to the transmission timing of the UE, and the third time is related to the transmission timing of the UE. Specifically, the network device may perform the method shown in FIG. 7 and belongs to the same concept as the embodiment of the transmitting method shown in FIG. 7, and its specific implementation process is described in the method embodiment, and details are not described herein again.

In practice, the communications device 110 may further include: at least one network interface 1103, where various components in the communications device 110 is coupled together by using a bus system 1104. It may be understood that the bus system 1104 is configured to implement connection and communication between these components. In addition to a data bus, the bus system 1104 further includes a power bus, a control bus, and a status signal bus. However, for clear description, various buses are marked as the bus system 1104 in FIG. 11, and the number of the processors 1101 may be at least one. The network interface 1103 is configured to perform wired or wireless communication between the communication device 110 and another device.

The memory 1102 in this embodiment of the present application is configured to store various types of data to support an operation of the communications device 110.

The methods disclosed in the foregoing embodiments of the present application may be applied to the processor 1101, or implemented by the processor 1101. The processor 1101 may be an integrated circuit chip, and has a signal processing capability. In an implementation process, each step of the foregoing method may be completed by using an integrated logic circuit of hardware in the processor 1101 or an instruction in a form of software. The processor 1101 may be a general-purpose processor, a digital signal processor (DSP), another programmable logic device, a discrete gate or transistor logic device, a discrete hardware component, or the like. The processor 1101 may implement or perform the methods, steps, and logical block diagrams disclosed in the embodiments of the present application. The general-purpose processor may be a microprocessor, any conventional processor, or the like. The steps of the method disclosed with reference to the embodiments of the present application may be directly performed and completed by a hardware decoding processor, or may be performed and completed by using a combination of hardware and software modules in a decoding processor. The software module may be located in a storage medium, the storage medium is located in the memory 1102, the processor 1101 reads information in the memory 1102, and completes the steps of the foregoing method in combination with hardware of the processor 1101.

In an exemplary embodiment, the communication device 110 may be an application specific integrated circuit (ASIC), a DSP, a programmable logic device (PLD), a complex programmable logic device (CPLD), a field programmable gate array (FPGA), a general-purpose processor, a controller, a Micro Controller Unit (MCU), a microprocessor, or other electronic components, to perform the foregoing method.

An embodiment of the present application further provides a computer-readable storage medium on which a computer program is stored.

When the computer program is executed by the processor of the UE, the computer program instructs the processor to obtain first information, where the first information is information related to the transmission timing. Specifically, the UE may perform the method shown in FIG. 4 and belongs to the same concept as the method embodiment shown in FIG. 4, and its specific implementation process is described in the method embodiment, and details are not described herein again.

When the computer program is executed by the processor of the UE, the computer program instructs the processor to: receive third time transmitted by the network device; and the transmission timing of the UE includes the third time. Specifically, the UE may perform the method shown in FIG. 6 and belongs to the same concept as the method embodiment shown in FIG. 6, and its specific implementation process is described in the method embodiment, and details are not described herein again.

When the computer program is executed by the processor of the network device, the computer program instructs the processor to: transmit the first information or the third time to the UE, where the first information is information related to the transmission timing of the UE, and the third time is related to the transmission timing of the UE. Specifically, the network device may perform the method shown in FIG. 7 and belongs to the same concept as the embodiment of the transmitting method shown in FIG. 7, and its specific implementation process is described in the method embodiment, and details are not described herein again.

In the several embodiments provided in the present application, it should be understood that the disclosed apparatus and method may be implemented in other manners. The device embodiments described above are merely illustrative, for example, the division of the units is merely logical function division, and there may be other division manners in actual implementation, for example, multiple units or components may be combined, or may be integrated into another system, or some features may be ignored or not performed. In addition, coupling, direct coupling, or communication connection between the components shown or discussed may be indirect coupling or communication connection through some interfaces, devices or units, and may be electrical, mechanical, or in other forms.

The units described as separate parts may or may not be physically separate, and parts displayed as units may or may not be physical units, may be located in one position, or may be distributed on a plurality of network units; and some or all of the units may be selected according to actual needs to achieve the objectives of the solutions of the embodiments.

In addition, functional units in the embodiments of the present application may all be integrated into one processing unit, or each of the units may be separately used as one unit, or two or more units are integrated into one unit; and the integrated unit may be implemented in a form of hardware, or may be implemented in a form of hardware plus a software functional unit.

A person of ordinary skill in the art may understand that all or some of the steps of the foregoing method embodiments may be implemented by hardware related to a program instruction, the foregoing program may be stored in a computer-readable storage medium, and when the program is executed, the steps including the foregoing method embodiments are executed; the foregoing storage medium includes: any medium that can store program codes, such as a mobile storage device, a read-only memory (ROM), a random access memory (RAM), a magnetic disk, or an optical disk.

If the integrated unit in the present application is implemented in a form of a software functional module and sold or used as an independent product, the integrated unit may also be stored in a computer-readable storage medium. Based on such understanding, the technical solutions in the embodiments of the present application or a part that contributes to the prior art may be embodied in the form of a software product, and the computer software product is stored in a storage medium and includes several instructions for causing a computer device (which may be a personal computer, a server, or a network device) to perform all or part of the methods described in the embodiments of the present application. The foregoing storage medium includes any medium that can store program code, such as a mobile storage device, a ROM, a RAM, a magnetic disk, or an optical disk.

It should be noted that "first", "second", and the like are used to distinguish similar objects, and are not necessarily used to describe a specific order or sequence.

In addition, the technical solutions described in the embodiments of the present application may be arbitrarily combined without conflict.

The above are only specific embodiments of the present disclosure, but the protection scope of the present disclosure is not limited thereto, and any person skilled in the art can easily conceive of change or replacement within the technical scope disclosed by the present disclosure, and should be covered within the protection scope of the present disclosure. Therefore, the protection scope of the present disclosure shall be subject to the protection scope of the claims.

## Claims

1. A transmitting method performed by a User Equipment, UE, comprising:
obtaining (401) first information, wherein the first information is information related to transmission timing;
obtaining a first threshold;
wherein when first time is greater than or equal to the first threshold, the method comprises:
performing the first adjustment to the transmission timing by the UE; wherein the first time comprises at least one of following:
receiving time difference;
difference between receiving time before the first adjustment and receiving time after the first adjustment;
a transmission timing error.

2. The method according to claim 1, wherein the first information comprises Synchronization Signal Block, SSB, information;
when a received beam is an SSB in the SSB information or a received Quasi Co-Location, QCL, is an SSB in the SSB information, the method further comprises:
applying first adjustment by the UE to adjust the transmission timing, wherein the SSB information comprises at least one of following:
an SSB index;
SSB pairing information;
SSB group information;
SSB group pairing information.

3. The method according to claim 1,
when first time is greater than or equal to the first threshold, the transmission timing of the UE comprises second time; wherein the second time comprises at least one of following:
receiving time difference;
twice of the receiving time difference;
difference between receiving time before the first adjustment and receiving time after the first adjustment;
twice of the difference between the receiving time before the first adjustment and the receiving time after the first adjustment;
twice of a transmission timing error;
the transmission timing error;
wherein the first time comprises at least one of following:
receiving time difference;
difference between receiving time before the first adjustment and receiving time after the first adjustment;
a transmission timing error.

4. The method according to claims 1, 2 or 3, wherein the first adjustment comprises:
one shot transmission timing adjustment.

5. The method according to claim 1, comprising:
receiving first indication information transmitted by a network device, wherein the first indication information is used to indicate enabling or disabling first adjustment;
or,
receiving at least one of following from a network device:
second indication information indicating whether being in a high-speed train scenario;
TCI conversion information;
third indication information indicating whether to start first adjustment between two network units.

6. The method according to claim 1, wherein the first threshold is indicated to the UE by the network device by using first signaling, or the first threshold is predefined in a technical specification.

7. The method according to claim 1, wherein the method further comprises:
transmitting third information to a network device, wherein the third information comprises at least one of following:
whether to support reception of Timing Advance, TA, information carried by a TCI state switch;
whether to support adjustment of uplink timing caused by a sharp change in the receiving time.

8. A transmitting method performed by a network device, comprising:
Transmitting first information to a UE, wherein the first information is information related to transmission timing of the UE;
transmitting a first threshold to the UE;
wherein when first time is greater than or equal to the first threshold, the UE performs the first adjustment to the transmission timing; wherein the first time comprises at least one of following:
receiving time difference;
difference between receiving time before the first adjustment and receiving time after the first adjustment;
a transmission timing error.

9. The method according to claim 8, wherein the method further comprises:
receiving third information from the UE, wherein the third information comprises at least one of following:
whether to support reception of timing advance, TA, information carried by a TCI state switch;
whether to support adjustment of uplink timing caused by a sudden change of the receiving time;
or,
wherein the first information comprises SSB information, and the SSB information comprises at least one of following: an SSB index; SSB pairing information; SSB group information; SSB group pairing information;
or,
wherein the method comprises:
transmitting first indication information to the UE, wherein the first indication information is used to indicate enabling or disabling first adjustment;
or,
wherein the method further comprises transmitting at least one of following to the UE:
second indication information indicating whether being in a high-speed train scenario; TCI conversion information; third indication information indicating whether to start first adjustment between two network units;
or,
wherein the method further comprises receiving second information from the UE, wherein the second information comprises at least one of following:
fourth indication information of whether to perform first adjustment; a quantity of times of performing first adjustment within a preset time duration; timestamp information of performing the first adjustment.

10. The method according to claim 8, wherein the first information further comprises timing advance indication information, and the timing advance indication information is configured to indicate an index range of the timing advance.

11. A communications device, comprising:
a processor (1101) and a memory (1102) configured to store a computer program executable on the processor,
wherein when the processor executes the computer program, the processor executes steps of the method according to any one of claims 1 to 7; or
when the processor executes the computer program, the processor executes steps of the method according to any one of claims 8 to 10.

12. A storage medium on which a computer program is stored, wherein when the computer program is executed by a processor, the processor implements steps of the method of any one of claims 1 to 7; or
when the computer program is executed by a processor, the processor implements steps of the method of any one of claims 8 to 10.
